# FASCICULE DE BREVET EUROPEEN

(11) **EP 3 894 666 B1**
(45) Date de publication et mention de la délivrance du brevet: **19.06.2024**
(21) Numéro de dépôt: 19845588.3
(22) Date de dépôt: 13.12.2019
(51) Int. Cl.: F01D 5/28

(54) **AUBE DE SOUFFLANTE COMPRENANT UN BOUCLIER FIN ET UN RAIDISSEUR**
FANSCHAUFEL MIT EINER DÜNNEN ABSCHIRMUNG UND EINER VERSTEIFUNG
FAN BLADE COMPRISING A THIN SHIELD AND A STIFFENER

(30) Priorité: 14.12.2018 FR 1872945
(43) Date de publication de la demande: 20.10.2021
(73) Titulaire: SAFRAN AIRCRAFT ENGINES, 75015 Paris (FR)
(72) Inventeur: DE GAILLARD, Thomas, Alain, 77550 MOISSY-CRAMAYEL (FR); BULOT, Benjamin, 77550 MOISSY-CRAMAYEL (FR); SOURYAVONGSA, Eddy, Keomorakott, 77550 MOISSY-CRAMAYEL (FR)
(74) Mandataire: Regimbeau
(86) Numéro de dépôt international: PCT/FR2019/053061
(87) Numéro de publication internationale: WO 2020/120921

(56) Documents cités:
- EP-A2- 2 159 378
- US-A1- 2014 030 105
- US-A1- 2015 086 377

## Description

### DOMAINE DE L'INVENTION

L'invention concerne de manière générale le domaine des turbomachines, et plus particulièrement celui des aubes de soufflantes de ces turbomachines et de leur procédé de fabrication.

L'invention s'applique plus particulièrement aux aubes de soufflante en matériau composite ou métallique, et dont le bord d'attaque comporte un bouclier structurel métallique.

### ARRIERE-PLAN TECHNOLOGIQUE

Une aube de soufflante (ou fan en anglais) d'une turbomachine comporte une pale ayant un bord d'attaque, un bord de fuite et des faces latérales intrados et extrados qui relient le bord d'attaque au bord de fuite.

Les aubes de turbomachine, et notamment les aubes de soufflante, subissent d'importantes contraintes majoritairement mécaniques en résultant en particulier de forces aérodynamiques, d'efforts dynamiques tels que centrifuges, et le cas échéant thermiques. Ces aubes doivent satisfaire à des conditions strictes de poids et d'encombrement. Il a donc été proposé d'utiliser des aubes dans un matériau composite comportant un renfort fibreux densifié par une matrice polymère, qui sont plus légères et qui ont une meilleure tenue aux contraintes que des aubes métalliques ayant une masse équivalente.

Lors de la certification et de la vie d'un moteur, les aubes de soufflante sont soumises à des ingestions d'oiseau. Le comportement mécanique des aubes de soufflante est donc optimisé pendant leur phase de conception pour respecter les règles de certification.

Il est connu d'équiper les aubes de soufflante réalisées en matériau composite d'un bouclier structurel métallique s'étendant sur toute la hauteur de la pale et au-delà de son bord d'attaque, comme mentionné dans le document EP 1 908 919, et comprenant un bord d'attaque configuré pour venir en regard du bord d'attaque de la pale ainsi que des ailettes configurées pour venir en appui contre l'intrados et l'extrados de l'aube. Un tel bouclier permet notamment de protéger le bord d'attaque en évitant des risques de délaminage, de rupture de fibre ou encore d'endommagement par décohésion fibre/matrice. Ce bouclier participe en outre à la rigidité de l'aube qui est nécessaire notamment pour des aspects fréquentiels et de déflexion à l'impact ainsi qu'à l'aérodynamisme de l'aube, en permettant un amincissement du bord d'attaque.

Il est également connu, comme mentionné dans les documents US 2015/0086377 A1 et US 2014/0030105 A1, de réaliser une aube de soufflante de turbomachine en matériau composite et dont le bord d'attaque est équipé d'un renfort structurel métallique.

D'un point de vue performances aérodynamiques, la réduction des épaisseurs des extrémités amont (bord d'attaque) et aval (bord de fuite) d'une aube permet de gagner en rendement aérodynamique ainsi qu'en comportement. En effet, la mise en place d'une technologie dite bord fin permet de limiter le contournement du profil qui entraine un pic de nombre de Mach sur les coupes transsoniques et supersoniques (en tête de l'aube) néfaste aux performances de la soufflante. De plus, la réduction de l'épaisseur du bord de fuite permet de réduire les pertes aérodynamiques de culot (pertes de profils au bord de fuite) principalement pour les coupes au-dessus de 60% de hauteur.

L'impact de ce type de technologie est directement rattaché au rendement de la turbomachine et donc à sa consommation de carburant.

Or, lorsque les aubes, notamment de soufflante, sont réalisées en matériau composite, il est difficile d'obtenir des épaisseurs fines (c'est-à-dire de l'ordre d'un à deux millimètres) tout en conservant une tenue mécanique du bord d'attaque (ou du bord de fuite) de la pale optimale. En effet, d'un point de vue mécanique et compte tenu des exigences de certification, il est nécessaire que le bord d'attaque et le bord de fuite puissent résister et limiter les endommagements de l'aube lorsqu'ils sont soumis à diverses sollicitations telles que des impacts d'oiseaux ou la répétition des cycles de vol (durée de vie). Cette difficulté d'obtention d'une épaisseur fine s'explique par l'épaisseur des torons utilisés pour réaliser le renfort fibreux (un toron étant constitué de plusieurs milliers de fibres, généralement de carbone, et ayant une épaisseur de l'ordre du millimètre) et par le nombre de couches nécessaire pour assurer une bonne tenue mécanique. Il est en effet plus difficile d'obtenir des propriétés matériau optimales par un entrelacement de deux couches que par un entrelacement sur un nombre de couches plus important.

Le bouclier permet déjà d'amincir le bord d'attaque l'aube. En effet, le bouclier est généralement réalisé en métal, ce qui permet d'atteindre des épaisseurs plus fines. Toutefois, pour amincir suffisamment le bord d'attaque du bouclier, il serait nécessaire d'augmenter drastiquement sa masse compte-tenu de l'épaisseur du bord d'attaque de la pale depuis lequel s'étend le bouclier. La masse sera d'autant plus importante qu'avec une épaisseur importante du bouclier, l'étendue de son nez sera importante pour avoir une section effilée. Or, en cas d'impact, notamment avec des oiseaux de petite taille, il existe un risque important que le bouclier se décolle localement de la pale et que ce décollement se propage sur la hauteur de l'aube jusqu'à détachement complet si aucune opération de maintenance ne serait exécutée plus ou moins rapidement.

### RESUME DE L'INVENTION

Un objectif de l'invention est donc de proposer une aube d'une partie tournante d'une turbomachine réalisée dans un matériau composite comprenant un renfort fibreux densifié par une matrice polymère, et notamment d'une soufflante, qui présente une faible épaisseur au niveau de son bord d'attaque et/ou de son bord de fuite afin d'améliorer les performances aérodynamiques et le comportement de l'aube, sans pour autant pénaliser la masse du bouclier.

Pour cela, l'invention propose une aube d'une partie tournante d'une turbomachine, notamment d'une soufflante, ladite aube comprenant :
- une pale réalisée dans un matériau composite comprenant un renfort fibreux densifié par une matrice polymère, un bord d'attaque et un bord de fuite
- un bouclier structurel rapporté et fixé sur le bord d'attaque ou le bord de fuite et
- au moins un raidisseur formé intégralement et en une seule pièce avec le bouclier, ledit raidisseur s'étendant dans une cavité formée entre le bouclier et l'un parmi le bord d'attaque ou le bord de fuite et configuré pour venir en appui contre le bord d'attaque ou le bord de fuite de sorte à augmenter une raideur de l'aube, le raidisseur comprend une série de parois formant au moins un soufflet.

Certaines caractéristiques préférées mais non limitatives de l'aube décrite ci-dessus sont les suivantes, prises individuellement ou en combinaison :
- l'aube présente une surface aérodynamique, ladite surface aérodynamique présentant une direction principale d'extension définissant un axe longitudinal de l'aube qui est sensiblement radial à un axe de révolution de la partie tournante, et une hauteur correspondant à une distance entre une limite inférieure de la surface aérodynamique et une tête de l'aube, le raidisseur s'étendant sur une partie seulement de la hauteur de ladite surface aérodynamique.
- le raidisseur s'étend sur au plus 70% de la hauteur, de préférence sur au plus 60% de ladite hauteur.
- le raidisseur est adjacent à la tête de l'aube.
- le raidisseur et le bouclier sont réalisés par fabrication additive.
- le raidisseur présente une direction d'extension, ladite direction d'extension étant sensiblement parallèle au bord d'attaque ou au bord de fuite.
- le raidisseur présente une direction d'extension, ladite direction d'extension étant sensiblement transversale au bord d'attaque ou au bord de fuite.
- le raidisseur et le bouclier sont métalliques, par exemple en titane.
- l'aube comprend un bouclier rapporté et fixé sur le bord d'attaque, un bouclier rapporté et fixé sur le bord de fuite, au moins un raidisseur formé
intégralement et en une seule pièce avec le bouclier structurel, ledit raidisseur s'étendant entre le bord d'attaque et le bouclier structurel et au moins un raidisseur formé intégralement et en une seule pièce avec le bouclier structurel, ledit raidisseur s'étendant entre le bord de fuite et bouclier structurel.

Selon un deuxième aspect, l'invention propose une soufflante comprenant au moins une aube comme décrite ci-dessus.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

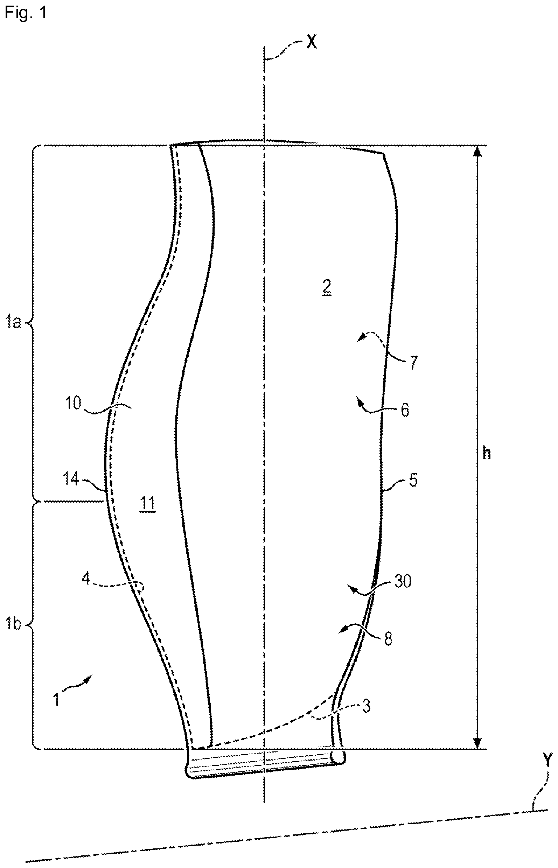

La figure 1 est une vue de côté d'un premier exemple de réalisation d'une aube conforme à un mode de réalisation de l'invention.
La figure 2a est une vue en coupe transversale d'une aube conventionnelle.
La figure 2b est une vue en coupe transversale de l'aube de la figure 1, dans un plan normal à l'axe X de la figure 1.
La figure 3 est une vue en coupe transversale d'une aube conforme à un deuxième exemple de réalisation de l'invention.
La figure 4 est une vue en coupe transversal d'une aube conforme à un troisième exemple de réalisation de l'invention.

### DESCRIPTION DETAILLEE D'UN MODE DE REALISATION

Dans ce qui suit, l'invention va plus particulièrement être décrite dans la cas d'une aube de soufflante d'une turbomachine. On comprendra toutefois que l'invention s'applique mutatis mutandis aux aubes de toute partie tournante de la turbomachine, tant que ces aubes sont réalisées en matériau composite.

De manière connue en soi, une aube 1 de soufflante conforme à l'invention comporte une surface aérodynamique 2 entre un pied d'aube 1 et une tête d'aube 1. L'aube 1 comprend également une pale présentant un bord d'attaque 4, un bord de fuite 5, une paroi intrados 6 et une paroi extrados 7. Le bord d'attaque 4 est configuré pour s'étendre en regard de l'écoulement des gaz entrant dans la turbomachine. Il correspond à la partie antérieure d'un profil aérodynamique qui fait face au flux d'air et qui divise l'écoulement d'air en un écoulement d'intrados et en un écoulement extrados. Le bord de fuite 5 quant à lui correspond à la partie postérieure du profil aérodynamique, où se rejoignent les écoulements intrados et extrados.

La surface aérodynamique 2 de l'aube 1 présente une direction principale d'extension, définissant l'axe longitudinal X de l'aube 1 qui est sensiblement radial à un axe de révolution Y de la soufflante. La surface aérodynamique 2 présente en outre une hauteur h correspondant à une distance entre une limite inférieure 3 de la surface aérodynamique 2 et une tête de l'aube 1, au niveau d'une intersection entre le bord d'attaque 4 et la limite inférieure.

La pale est réalisée dans un matériau composite comprenant un renfort fibreux densifié par une matrice polymère.

Le renfort fibreux peut être formé à partir d'une préforme fibreuse obtenue par tissage tridimensionnel avec épaisseur évolutive. Il peut notamment comprendre des fibres en carbone, en verre, aramide et/ou céramique. La matrice quant à elle est typiquement une matrice polymère, par exemple époxyde, bismaléimide ou polyimide.

La pale est alors formée par moulage au moyen d'un procédé d'injection sous vide de résine du type RTM (pour « Resin Transfer Moulding), ou encore VARRTM (pour Vacuum Resin Transfer Molding).

L'aube 1 comprend en outre un bouclier 10 structurel qui est rapporté et fixé sur le bord d'attaque 4 de la pale.

Le bouclier 10 est une pièce monobloc comprenant une section sensiblement en forme de V présentant une base 13, pouvant aussi être qualifié de « nez », configurée pour s'étendre dans le prolongement du bord d'attaque 4 de la pale, ainsi qu'une ailette intrados 11 et une ailette extrados 12 configurées pour épouser respectivement les parois intrados 6 et extrados 7 de la pale. Les ailettes peuvent présenter un profil effilé ou aminci en direction du bord de fuite 5 de la pale.

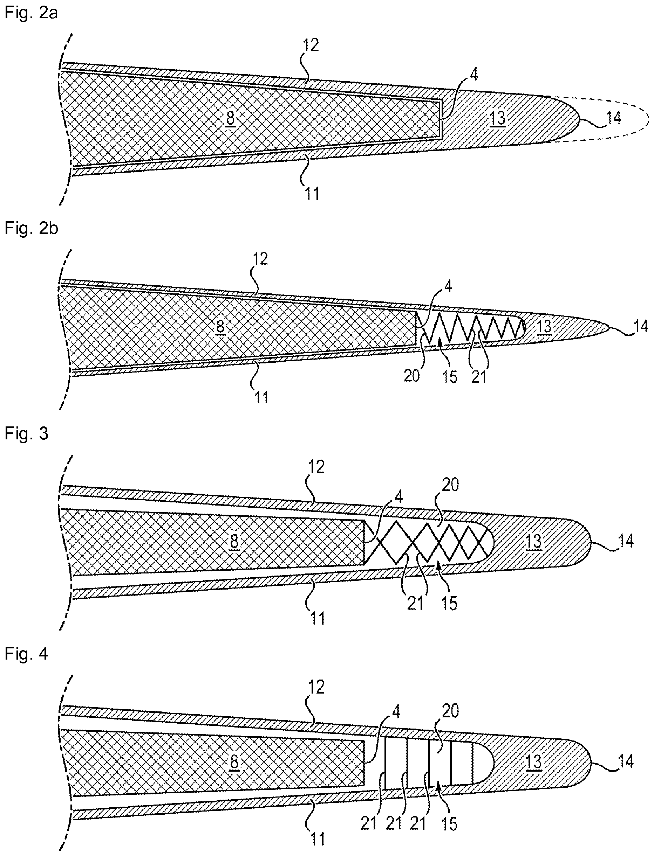

Le bouclier 10 s'étend sur toute la hauteur de la surface aérodynamique 2 de l'aube 1. Conventionnellement, lorsque l'aube 1 est intégrée dans une soufflante, la portion radialement interne de la veine d'écoulement est délimitée par une plateforme inter-aubes (représentée en traits hachurées sur les figures 2 et 3). La surface aérodynamique 2 de l'aube 1 correspond alors à la surface de l'aube 1 s'étendant entre la tête de l'aube 1 et les plateformes inter-aubes placées de part et d'autre de son pied. Par ailleurs, la limite inférieure 3 de la surface aérodynamique 2 de l'aube 1 correspond à l'intersection entre l'aube 1 et la plateforme inter-aubes.

Comme illustré sur les figures, le bouclier 10 épouse la forme du bord d'attaque 4 de la pale qu'il prolonge pour former un nouveau bord d'attaque 12, dit bord d'attaque 14 du bouclier 10. Le bouclier 10 forme donc la partie antérieure du profil aérodynamique de l'aube 1.

Le bouclier 10 de l'aube 1 est généralement métallique, par exemple en titane, afin de conférer une grande capacité d'absorption de l'énergie due aux éventuels chocs.

Le bouclier 10 et la pale sont réalisés séparément. Le bouclier 10 est ensuite rapporté sur le bord d'attaque 4 de la pale et fixé sur celle-ci par collage, par exemple au moyen d'une colle cyano-acrylique ou époxy. Pour cela, le bouclier 10 présente un profil interne adapté pour épouser la forme arrondie du bord d'attaque 4 de l'aube 1, avec ou sans contact avec ledit bord d'attaque 4. Le cas échéant, un soyage des parois intrados 6 et extrados 7 de la pale peut être effectué afin de faciliter l'assemblage du bouclier 10.

Afin de permettre la réalisation d'un bord d'attaque fin sur une aube 1 en matériau composite, sans augmenter pour autant la masse de l'aube 1, l'aube 1 comporte en outre un raidisseur 20 formé intégralement et en une seule pièce avec le bouclier 10 structurel. Le raidisseur 20 s'étend entre le bord d'attaque 4 et au moins une face interne du bouclier 10 en venant en appui contre le bord d'attaque 4 de la pale 8 de sorte à augmenter une raideur de l'aube 1.

On comprendra que l'invention s'applique mutatis mutandis au cas où le bouclier 10 est appliqué sur le bord de fuite de l'aube 1. Par souci de simplification de la description, l'invention ne sera cependant décrite et illustrée que dans le cas où le bouclier 10 est appliqué sur le bord d'attaque 4. On notera en outre qu'une aube 1 peut à la fois comprendre un bouclier 10 avec raidisseur 20 sur le bord d'attaque 4 et un bouclier 10 avec raidisseur sur le bord de fuite 5 de la pale 8.

L'utilisation d'un raidisseur 20 permet de réduire la masse de la base 13 du bouclier 10 et créant une cavité 15 entre la base 13 et le bord d'attaque de la pale 8, et de combler partiellement cette cavité 15 avec une pièce (le raidisseur 20) de faible masse mais qui est capable d'améliorer la raideur du bouclier 10. Il est donc possible d'augmenter la distance entre le bord d'attaque 14 du bouclier 10 et le bord d'attaque 4 de la pale 8, et par conséquent d'affiner le bord d'attaque 14 sans augmenter pour autant la masse du bouclier 10.

On pourra par exemple se référer aux Figures 2a et 2b, qui illustrent respectivement une aube 1 dépourvue de raidisseur 20 et une aube 1 conforme à un mode de réalisation de l'invention. Une comparaison de ces deux Figures permet de voir que la base 13 du bord d'attaque est nettement plus épaisse sur la Figure 2a que sur la Figure 2b et que la matière nécessaire pour atteindre l'épaisseur obtenue dans le cas de l'aube 1 de l'invention serait très importante en l'absence de raidisseur 20 (voir également la partie en pointillés sur la Figure 2a qui représente l'épaisseur souhaitée pour le bouclier 10 et son étendue pour disposer d'une section effilée).

Dans une forme de réalisation, le raidisseur 20 s'étend sur une partie seulement de la hauteur de la surface aérodynamique 2. Plus particulièrement, le raidisseur 20 peut ne s'étendre que sur la partie supérieure 1a de l'aube 1, c'est-à-dire la partie adjacente à la tête de l'aube 1, la partie inférieure 1b (c'est-à-dire la partie adjacente au pied de l'aube 1) étant dépourvue de raidisseur 20. En effet, la Demanderesse s'est aperçue du fait que le bord d'attaque 14 de la partie inférieure 1b de l'aube 1 pouvait présenter une épaisseur plus importante dans la mesure où son impact sur l'aérodynamisme et le comportement de l'aube 1 était moindre. En outre, les impacts d'objets, et notamment d'oiseaux, ne dégradent pas l'aube 1 dans la partie inférieure 1b de l'aube 1 et ne risquent donc pas de décoller le bouclier 10.

Dans cette forme de réalisation, le profil du bouclier 10 est donc conventionnel dans la partie inférieure 1b de l'aube 1, c'est-à-dire plus épais que dans sa partie supérieure 1a.

Par exemple, pour une aube 1 de soufflante, le raidisseur 20 peut s'étendre sur au plus 70% de la hauteur h de la surface aérodynamique 2, en partant de la tête de l'aube 1, de préférence sur au plus 60% de ladite hauteur h. L'aube 1 est alors dépourvue de raidisseur 20 dans sa partie inférieure 1b (sur le reste de la hauteur h de la surface aérodynamique 2, soit environ 30% de sa hauteur h, de préférence 40%).

Dans une forme de réalisation, le raidisseur 20 est configuré pour raidir le bord d'attaque dans la direction de l'axe X, c'est-à-dire selon la hauteur de la surface aérodynamique 2, afin de limiter la flexion de l'aube 1. Le raidisseur 20 s'étend alors principalement dans cette direction de l'aube 1. Des exemples de réalisation d'un tel raidisseur 20 sont illustrés en Figures 2b et 3 et comprennent une série de parois 21 formant au moins un soufflet. Par exemple, le raidisseur 20 peut comprendre une série de parois 21 planes connectées deux à deux de manière à former une pièce continue entre le bord d'attaque 4 de la pale 8 et la base 13 du bouclier 10. Les parois 21 ont chacune un bord en appui contre l'ailette intrados 11 et un bord en appui contre l'ailette extrados 12 et forment ainsi le soufflet (Figure 2b). Par appui, on comprendra ici aussi bien un appui linéique qu'une liaison solide entre les parois 21 planes et les ailettes intrados 11 et extrados 12. Le cas échéant, le raidisseur 20 peut comprendre un deuxième soufflet de forme sensiblement identique dont les parois 21 croisent celles du premier soufflet (Figure 3).

Dans les réalisations telles qu'illustrées à la figure 2b ou à la figure 3, une paroi d'extrémité du soufflet peut être transversale à l'aube, sensiblement perpendiculairement à l'ailette extrados 12 et à l'ailette intrados 11, en étant prévue pour être collée sur le bord d'attaque 4 de l'aube. Dans la forme de réalisation associée à la figure 2b, cette paroi transversale de soufflet se raccorde à l'extrémité libre de la paroi inclinée de soufflet à l'opposé du nez du bouclier 10. Dans la forme de réalisation associée à la figure 3, cette paroi transversale de soufflet se raccorde aux extrémités libres des deux dernières parois 21 inclinées de soufflet à l'opposé du nez du bouclier 10. Cette paroi transversale d'extrémité de soufflet minimise la quantité de colle de liaison du bord d'attaque 4 de l'aube avec le soufflet constituant le raidisseur 20.

Dans une deuxième forme de réalisation, le raidisseur 20 est configuré pour raidir l'aube 1 dans une direction transversale à l'axe X, c'est-à-dire suivant une direction parallèle à l'axe de révolution de la partie tournante. Le raidisseur 20 s'étend alors principalement suivant cette direction transversale. Dans cette deuxième forme de réalisation illustrée en figure 4, les parois 21 sont donc transversales à l'aube, sensiblement perpendiculairement à l'ailette extrados 12 et à l'ailette intrados 11 en y étant raccordées par exemple par soudage laser côté interne du bouclier 10 ou par collage ou en venant de fabrication monolithique par fabrication additive.

Le nombre, l'inclinaison et l'épaisseur des parois 21 formant le ou les soufflets du raidisseur 20 peuvent être optimisés en conception, en fonction de l'application de l'aube 1 et des contraintes qu'elle est susceptible de subir. Notamment le nombre, l'inclinaison et l'épaisseur des parois dépend des paramètres suivants : le nombre d'aubes, la vitesse de rotation, le diamètre de l'aube 10, le matériau du bord d'attaque 4 et de la pale en matériau composite, le profil aérodynamique 2 incluant l'épaisseur du bord d'attaque 4 de l'aube 1, l'épaisseur du bouclier 10

Dans une troisième forme de réalisation, le raidisseur 20 est configuré pour raidir l'aube 1 à la fois dans la direction de l'axe X et dans la direction transversale. Le raidisseur 20 peut alors comprendre un réseau en quadrillage.

Dans ce cas de forme de réalisation non représentée en étant proche de la réalisation illustrée à la figure 3, au moins une des extrémités d'au moins l'une des parois 21 est raccordée par exemple par soudage laser ou par collage à l'ailette 11, 12 correspondante du bouclier 10, à savoir l'ailette extrados 12 et/ou l'ailette intrados 11.

Le raidisseur 20 et le bouclier 10 sont métalliques, par exemple en titane.

Compte-tenu de la forme complexe du bouclier 10 et du raidisseur 20, ils sont de préférence réalisés par fabrication additive.

## Revendications

1. Aube (1) d'une partie tournante d'une turbomachine, notamment d'une soufflante, ladite aube (1) comprenant :
- une pale (8) réalisée dans un matériau composite comprenant un renfort fibreux densifié par une matrice polymère, un bord d'attaque (4) et un bord de fuite (5), et
- un bouclier (10) structurel rapporté et fixé sur le bord d'attaque (4) ou le bord de fuite (5),
l'aube (1) étant **caractérisée en ce qu'**elle comprend en outre au moins un raidisseur (20) formé intégralement et en une seule pièce avec le bouclier (10), ledit raidisseur (20) s'étendant dans une cavité (15) formée entre le bouclier (10) et l'un parmi le bord d'attaque (4) ou le bord de fuite (5) et configuré pour venir en appui contre le bord d'attaque (4) ou le bord de fuite (5) de sorte à augmenter une raideur de l'aube (1) et **en ce que** le raidisseur (20) comprend une série de parois (21) formant au moins un soufflet.

2. Aube (1) selon la revendication 1, présentant une surface aérodynamique (2), ladite surface aérodynamique (2) présentant une direction principale (8) d'extension définissant un axe longitudinal (X) de l'aube (1) qui est sensiblement radial à un axe de révolution (Y) de la partie tournante, et une hauteur (h) correspondant à une distance entre une limite inférieure (3) de la surface aérodynamique (2) et une tête de l'aube (1), le raidisseur (20) s'étendant sur une partie seulement de la hauteur (h) de ladite surface aérodynamique (2).

3. Aube (1) selon la revendication 2, dans laquelle le raidisseur (20) s'étend sur au plus 70% de la hauteur (h), de préférence sur au plus 60% de ladite hauteur (h).

4. Aube (1) selon l'une des revendications 1 ou 2, dans laquelle le raidisseur (20) est adjacent à la tête de l'aube (1).

5. Aube (1) selon l'une des revendications 1 à 4, dans laquelle le raidisseur (20) et le bouclier (10) sont réalisés par fabrication additive.

6. Aube (1) selon l'une des revendications 1 à 5, dans laquelle le raidisseur (20) présente une direction d'extension, ladite direction d'extension étant sensiblement parallèle au bord d'attaque (4) ou au bord de fuite (5).

7. Aube (1) selon l'une des revendications 1 à 5, dans laquelle le raidisseur (20) présente une direction d'extension, ladite direction d'extension étant sensiblement transversale au bord d'attaque (4) ou au bord de fuite (5).

8. Aube (1) selon l'une des revendications 1 à 7, dans laquelle le raidisseur (20) et le bouclier (10) sont métalliques, par exemple en titane.

9. Aube (1) selon l'une des revendications 1 à 8, comprenant
- un bouclier (10) rapporté et fixé sur le bord d'attaque (4)
- un bouclier (10) rapporté et fixé sur le bord de fuite (5),
- au moins un raidisseur (20) formé intégralement et en une seule pièce avec le bouclier (10) structurel, ledit raidisseur (20) s'étendant entre le bord d'attaque (4) et le bouclier (10) structurel et
- au moins un raidisseur (20) formé intégralement et en une seule pièce avec le bouclier (10) structurel, ledit raidisseur (20) s'étendant entre le bord de fuite (5) et bouclier (10) structurel.

10. Soufflante comprenant au moins une aube (1) selon l'une des revendications 1 à 9.

## Patentansprüche

1. Schaufel (1) eines drehenden Teils einer Turbomaschine, insbesondere eines Gebläses, wobei die Schaufel (1) umfasst:
- ein Blatt (8) aus einem Verbundmaterial, das eine durch eine Polymermatrix verdichtete Faserverstärkung, eine Vorderkante (4) und eine Hinterkante (5) umfasst, und
- eine strukturelle Abschirmung (10), die an der Vorderkante (4) oder an der Hinterkante (5) angebracht und befestigt ist,
wobei die Schaufel (1) **dadurch gekennzeichnet ist, dass** sie ferner mindestens eine Versteifung (20) umfasst, die vollständig und in einem einzigen Stück mit der Abschirmung (10) gebildet ist, wobei sich die Versteifung (20) in einem Hohlraum (15) erstreckt, der zwischen der Abschirmung (10) und entweder der Vorderkante (4) oder der Hinterkante (5) gebildet und dazu ausgelegt ist, an der Vorderkante (4) oder an der Hinterkante (5) derart aufzuliegen, dass eine Steifigkeit der Schaufel (1) verstärkt wird und dass die Versteifung (20) eine Reihe von Wänden (21) umfasst, die mindestens einen Balg bilden.

2. Schaufel (1) nach Anspruch 1, aufweisend eine aerodynamische Oberfläche (2), wobei die aerodynamische Oberfläche (2) eine Haupterstreckungsrichtung (8) aufweist, die eine Längsachse (X) der Schaufel (1) definiert, die etwa radial zu einer Drehachse (Y) des drehenden Teils ist, und eine Höhe (h), die einem Abstand zwischen einer unteren Grenze (3) der aerodynamische Oberfläche (2) und einem Kopf der Schaufel (1) entspricht, wobei sich die Versteifung (20) nur über einen Teil der Höhe (h) der aerodynamischen Oberfläche (2) erstreckt.

3. Schaufel (1) nach Anspruch 2, wobei sich die Versteifung (20) über höchstens 70% der Höhe (h), vorzugsweise über höchstens 60% der Höhe (h), erstreckt.

4. Schaufel (1) nach einem der Ansprüche 1 oder 2, wobei die Versteifung (20) dem Kopf der Schaufel (1) benachbart ist.

5. Schaufel (1) nach einem der Ansprüche 1 bis 4, wobei die Versteifung (20) und die Abschirmung (10) durch additive Fertigung hergestellt sind.

6. Schaufel (1) nach einem der Ansprüche 1 bis 5, wobei die Versteifung (20) eine Erstreckungsrichtung aufweist, wobei die Erstreckungsrichtung etwa parallel zur Vorderkante (4) oder zur Hinterkante (5) ist.

7. Schaufel (1) nach einem der Ansprüche 1 bis 5, wobei die Versteifung (20) eine Erstreckungsrichtung aufweist, wobei die Erstreckungsrichtung etwa quer zur Vorderkante (4) oder zur Hinterkante (5) ist.

8. Schaufel (1) nach einem der Ansprüche 1 bis 7, wobei die Versteifung (20) und die Abschirmung (10) metallisch, beispielsweise aus Titan, sind.

9. Schaufel (1) nach einem der Ansprüche 1 bis 8, umfassend:
- eine an der Vorderkante (4) angebrachte und befestigte Abschirmung (10),
- eine an der Hinterkante (5) angebrachte und befestigte Abschirmung (10),
- mindestens eine Versteifung (20), die vollständig und in einem einzigen Stück mit der strukturellen Abschirmung (10) gebildet ist, wobei sich die Versteifung (20) zwischen der Vorderkante (4) und der strukturellen Abschirmung (10) erstreckt, und
- mindestens eine Versteifung (20), die vollständig und in einem einzigen Stück mit der strukturellen Abschirmung (10) gebildet ist, wobei sich die Versteifung (20) zwischen der Hinterkante (5) und der strukturellen Abschirmung (10) erstreckt.

10. Gebläse, das mindestens eine Schaufel (1) nach einem der Ansprüche 1 bis 9 umfasst.

## Claims

1. Blade (1) of a rotating part of a turbomachine, in particular of a fan, the said blade (1) comprising :
- a blade (8) made of a composite material comprising a fibrous reinforcement densified by a polymer matrix, a leading edge (4) and a trailing edge (5), and
- a structural shield (10) attached and fixed to the leading edge (4) or the trailing edge (5),
the blade (1) being **characterised in that** it further comprises at least one stiffener (20) formed integrally and in one piece with the shield (10), said stiffener (20) extending into a cavity (15) formed between the shield (10) and one of the leading edge (4) or the trailing edge (5) and configured to bear against the leading edge (4) or the trailing edge (5) so as to increase a stiffness of the blade (1) and **in that** the stiffener (20) comprises a series of walls (21) forming at least one bellows.

2. Blade (1) according to claim 1, having an aerodynamic surface (2), said aerodynamic surface (2) having a main direction (8) of extension defining a longitudinal axis (X) of the blade (1) which is substantially radial to an axis of revolution (Y) of the rotating part, and a height (h) corresponding to a distance between a lower limit (3) of the aerodynamic surface (2) and a tip of the blade (1), the stiffener (20) extending over only part of the height (h) of said aerodynamic surface (2).

3. Blade (1) according to claim 2, wherein the stiffener (20) extends over at most 70% of the height (h), preferably over at most 60% of said height (h).

4. Blade (1) according to one of claims 1 or 2, wherein the stiffener (20) is adjacent to the tip of the blade (1).

5. Blade (1) according to one of claims 1 to 4, wherein the stiffener (20) and the shield (10) are produced by additive manufacturing.

6. Blade (1) according to one of claims 1 to 5, wherein the stiffener (20) has a direction of extension, said direction of extension being substantially parallel to the leading edge (4) or the trailing edge (5).

7. Blade (1) according to one of claims 1 to 5, wherein the stiffener (20) has a direction of extension, said direction of extension being substantially transverse to the leading edge (4) or the trailing edge (5).

8. Blade (1) according to one of claims 1 to 7, wherein the stiffener (20) and the shield (10) are metallic, for example made of titanium.

9. Blade (1) according to one of claims 1 to 8, comprising:
- a shield (10) attached and fixed to the leading edge (4),
- a shield (10) attached and fixed to the trailing edge (5),
- at least one stiffener (20) formed integrally and in a single piece with the structural shield (10), said stiffener (20) extending between the leading edge (4) and the structural shield (10), and
- at least one stiffener (20) formed integrally and in a single piece with the structural shield (10), said stiffener (20) extending between the leading edge (4) and the structural shield (10) and
- at least one stiffener (20) formed integrally and in a single piece with the structural shield (10), said stiffener (20) extending between the trailing edge (5) and the structural shield (10).

10. Fan comprising at least one blade (1) according to one of claims 1 to 9.
